# EUROPEAN PATENT APPLICATION

(11) **EP 1 371 893 A1**
(43) Date of publication of application: **17.12.2003**
(21) Application number: 03076873.3
(22) Date of filing: 16.06.2003
(51) Int. Cl.: F16L 31/00

(54) **Air ventilation conduit**

(30) Priority: 14.06.2002 NL 1020864
(71) Applicant: UBBINK NEDERLAND B.V., NL-6984 AA Doesburg (NL)
(72) Inventor: Ravestein, Frans Gerrit, 3931 EL Woudenberg (NL); van Dijk, Floris, 6983 AA Doesburg (NL)
(74) Representative: Ferguson, Alexander

(57) **Abstract**

Air ventilation conduit comprising at least two consecutive pipe members (2), and a connection sleeve (5) for connecting the pipe members (2) one to the other, the pipe members (2) being manufactured of a synthetic material that is compressible and having a substantially equal cross-section at their ends (4) that are connected to each other, the connection sleeve (5) comprising a sleeve band (6) manufactured of a bendable synthetic material, and provided with means for forming a squeeze closure for the sleeve band (6) around the ends (4) of the pipe members (2).

## Description

The invention relates to an air ventilation conduit.

Air ventilation conduits are used in residential buildings and houses for the mechanical ventilation of housing accommodations. In a first type thereof there was only question of a discharge conduit system, for the discharge of air and moisture from humid areas. In a second, recent type thereof fresh air from outside is also brought into the house by means of supply conduits. Both conduits can be thermally connected to each other in a heat exchanger.

The air passed through the conduits contains dirt, such as pollutions from the house but also dirt from the outside air. The dirt may deposit on the inner surface of the conduit and at the location of the conduit couplings. In the course of time a considerable quantity of dirt may be deposited which may constitute a source of contamination. Particularly the air introduced into housing accommodations may pose a health hazard to the occupants. This risk may be reduced by having the conduits inspected and cleansed regularly. In the existing systems the conduit members are provided at one end with integrally formed socket ends in order to be connected to each other by inserting them into each other in a substantially airtight manner. The ventilation conduit has to be almost entirely detached to be able to detach the conduit members from which the conduit has been built up in order to cleanse them. This is a laborious and time-consuming job, for which reason one often neglects doing so.

It is an object of the invention to improve on this.

It is a further object of the invention to provide a ventilation conduit in which the conduit members are easy to detach and yet a substantially airtight connection between the conduit members is present.

A further object of the invention is to provide a ventilation conduit that is easy to inspect.

Yet another object of the invention is to provide a ventilation system that is easy to install.

From one aspect the invention to that end provides an air ventilation conduit comprising at least two consecutive pipe members, and a connection sleeve for connecting the pipe members one to the other, the pipe members being manufactured of a synthetic material that is compressible and having a substantially equal cross-section at their ends that are connected to each other, the connection sleeve comprising a sleeve band manufactured of a bendable synthetic material, and provided with means for forming a squeeze closure for the sleeve band around the ends of the pipe members.

In the ventilation conduit according to the invention the pipe members can be aligned in a radial manner and then be secured to each other with a separate sleeve connection, in which due to the compression of the material of the pipe members the airtight envelopment by the sleeve band is realised. By detaching the sleeve connection a pipe member can simply and without removing the adjacent pipe members be taken away to be inspected and if necessary be cleansed.

Preferably the pipe members are manufactured of synthetic foamed material, -expanded- polyethylene being particularly advantageous because said material can be transformed into a long tube by means of extrusion without many problems. Polyethylene furthermore is well compressible, so that a good sealing can easily be achieved. Polyethylene has very good sound insulating properties. The pipe members may have a constant cross-section along their length, so without socket end. Such pipe members can easily be cut to size by the installer, as a result of which the installation is simplified and no stock of pipe members of different lengths has to be kept.

The pipe members may be placed butt against each other with their end edges.

In a first development of the ventilation conduit according to the invention the sleeve band is open and at a first and a second end, respectively, is provided with first and second band edges that engage each other. As a result the sleeve band can be brought at the correct location with both band edges spaced apart and with broad play before the squeeze closure is completed.

In a further embodiment thereof the squeeze closure means comprise tensioning means for tensioning both band edges towards each other, particularly against each other. In a further development of this embodiment the tensioning means are adapted for activation by motion in a plane perpendicular to the conduit axis.

The tensioning means preferably form a click-through connection, due to which the assembling and disassembling is simple. The tensioning means may comprise a click-through strip which is connected to the sleeve band near its first end and is provided with first hook means for cooperation with second hook means that are provided near the second end of the sleeve band.

The click-through strip may be permanently connected to the sleeve band, and in that case be formed as one unity therewith. Alternatively the click-through strip may be manufactured separately and attached to the sleeve band by means of a snap connection. This offers the advantage that the forming of sleeves for several pipe diameters can remain limited to the sleeve bands, as a result of which a click-through strip of general dimensions will suffice.

Preferably the click-through strip is hinged to the first sleeve band end by means of a bend-rigid strip with hinge ends, and at its side facing away from the first sleeve band end provided with first snap means that cooperate with second snap means at the sleeve band. In this way the sleeve connection can be closed and opened with a simple movement. The click-through strip is permanently connected to the sleeve band.

The strip with hinge ends preferably is moveable between a mounting position in which the strip with hinge ends, considered in the direction towards the second sleeve band end, is oriented to the outside of the sleeve band, and a closing position in which the strip with hinge ends, considered in the direction towards the second sleeve band end, is oriented to the inside of the sleeve band, and is moved through a dead centre. In this way the click action is enhanced and a large tensile force can be exerted in the squeeze closure. The snap means may then optionally be dispensed with.

By means of integrally formed hinges, the strip with hinge ends may be connected to the click-through strip and to the sleeve band, in which the click-through strip may easily be manufactured by means of co-extrusion. The integrally formed hinges may be living hinges, particularly of the same material, or integrally formed of relatively resilient material.

The first snap means may be integrally formed of relatively soft material with the click-through strip and the second snap means may be of the material of the sleeve band. The first snap means as well may then be integrally formed in a co-extrusion process.

The realisation of the squeeze closure, particularly the movement of the click-through strip, is facilitated when the first and second band edge are formed convex and concave, respectively, in order to be able to rotate in each other. They are as it were pre-positioned.

In a simple manner the connection sleeve may be made as a whole by co-extrusion. Thus large lengths may be manufactured, from which the connection sleeves, for instance of a decimeter, can be separated.

In a second further development of the ventilation conduit according to the invention the tensioning means are adapted for activation by motion in a plane parallel to the conduit axis. Such an embodiment may useful at locations where the conduit is closely surrounded by solid construction elements such as walls.

In a simple further embodiment thereof the tensioning means comprise a wedge member that can be slid over the band end edges for tensioning them towards each other, at least one of the band end edges being formed correspondingly slanting.

The wedge member may form a separate part and preferably be active over at least almost the full length of the band end edges. The connection can be designed very simple here.

Alternatively the wedge member can be a slide placed permanently on the band end edges, so that it cannot get lost and placement actions can be reduced.

Preferably two wedge members have been provided that can be slid away from each other for activation, in order to each be active on a respective pipe member end.

From another aspect it is provided that the sleeve connection is permanently continuously circumferential. The sleeve connection is then slid on one of the pipe members for assembly, and after the end edges of both pipe members have been brought against each other is slid over the joint and is then secured.

In an alternative embodiment the sleeve connection in the open position is interrupted in circumferential direction, so that it can be brought around both pipe member ends in radial direction.

In a further development the sleeve band at the inner surface is provided with one or more protrusions, preferably situated near the edges, as a result of which the engagement on both accommodated pipe member ends can be optimal.

In case the sleeve band at the inner surface has been provided with one or more continuous edges, which preferably have been provided with piloting edges at the ends facing each other, the sleeve band can be rotated during installation to a rotation position that is advantageous to the installer and/or is aesthetically advantageous.

When the protrusions at the axial inner side are substantially transverse to the conduit axis and/or the protrusions at the axial outside are slanting to the conduit axis, the possible axial insertion of the pipe member ends in the sleeve band is facilitated and/or a returning motion is counteracted.

The invention furthermore provides a sleeve connection suitable and intended for an air ventilation conduit according to the invention.

The invention will be elucidated on the basis of a number of exemplary embodiments shown in the attached drawings, in which:
Figure 1 shows a side view, partially in cross-section, of a first embodiment of a sleeve connection in an air ventilation conduit according to the invention;
Figure 2A shows the sleeve connection band of the arrangement of figure 1, during arranging:
Figure 2B shows the sleeve connection of figure 2A in closed position;
Figure 2C shows an alternative sleeve band according to the invention;
Figure 2D shows a cross-section through the sleeve band of figure 2C;
Figure 3 shows an alternative sleeve connection in detail;
Figures 4A-D show a cross-section, a side view, an end view and a partial cross-section, respectively, of a further embodiment of a connection in an air ventilation conduit according to the invention; and
Figures 5A and 5B show a partial side view and a partial cross-section, respectively, of another embodiment of a connection around an air ventilation conduit according to the invention.

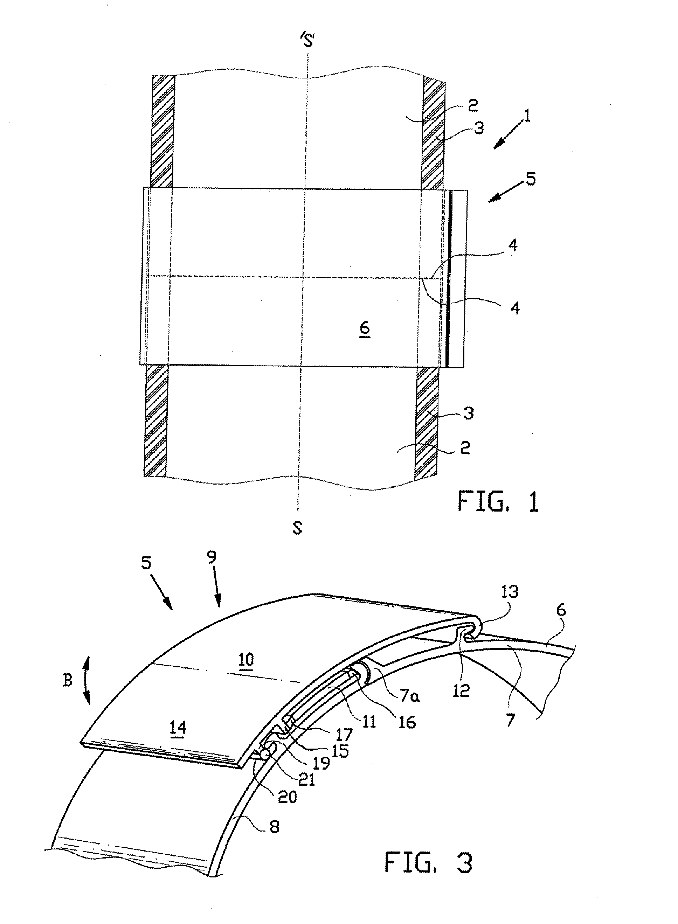

The connection 1 shown in figure 1 is situated at the location where two pipe members 2 meet, of which pipe members the wall 3 in this example has been made of polyethylene foam and has been manufactured by means of extrusion. The pipe members 2 have a constant outer diameter over the full length. At their ends 4 they are placed butt against each other.

Around the connection location a connection sleeve 5 has been arranged, having a sleeve band 6 that runs around the connection location. The sleeve band 6 is approximately 10 cm wide and runs in a circumferentially clamping manner around the ends of the pipe members 2. The wall 3 is compressed at that location, so that a tight contact is present between the inner surface of the sleeve band and the outer surface of the pipe walls 3, so that a practically airtight connection is realised.

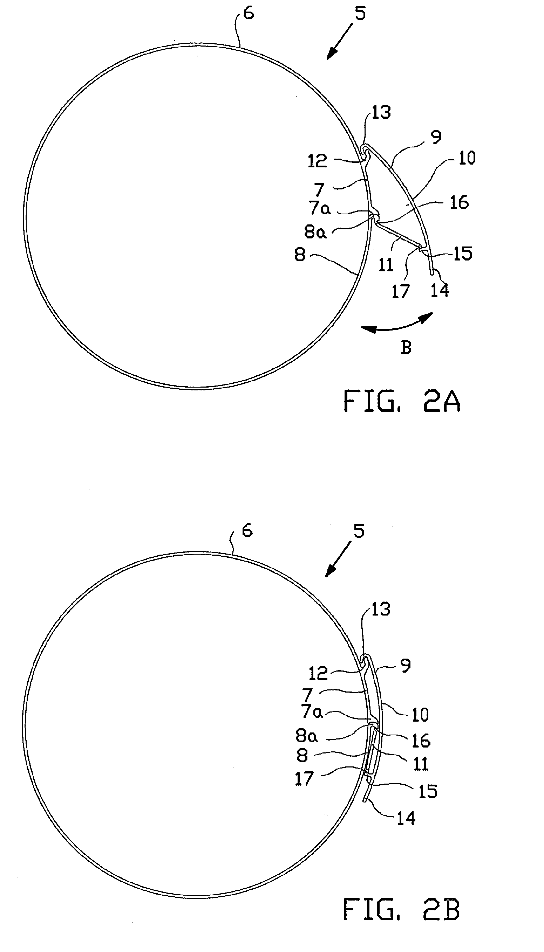

As is shown in the figures 2A and 2B the sleeve band 6 has two end areas 7 and 8, having support end edge 7a with a concave surface and an end edge 8a with a convex surface, respectively.

In the end area 7 a hook edge 12 has furthermore been formed at a distance from end edge 7a. A closing device 9 has been connected as a unity with the end area 8, the closing device 9 having a bent closing strip 10 which at one end has been provided with a hook edge 13, that is able to cooperate with hook edge 12, and at the other end has been provided with an engagement edge 14. At the side facing the sleeve band 6, near the engagement edge 14, a rib 15 is integrally formed to the closing strip 10, which via compliant hinge 17 changes into a rigid strip with hinge ends 11, which strip with hinge ends 11 at the other edge is connected to the end edge 8a by compliant hinge 16.

When arranging the connection sleeve 5 the band 6 can be entirely opened, in order to be wrapped around the pipe member ends in a radial manner with respect to centre line S of the pipe members 2. Subsequently the end areas 7 and 8 are brought towards each other in the direction A, and the hook edges 12 and 13 are brought into engagement with each other.

When tilting the closing strip 9 in the direction B, perpendicular to the centre line S, the end edges 7a and 8a will be urged towards each other under leverage, due to on the one hand the hook action between the hook edges 12 and 13, and on the other hand the force exerted via the hinging strip with hinge ends 11. When the edges 7a and 8a are brought against each other, due to further movement of the closing strip 10 in the direction B, the strip with hinge ends 11 can be urged through a tangential plane to the circle concentric with S, running through compliant hinge 16, to the inside through the dead centre, to the tilted position shown in figure 2B, in which the position of the closing strip 10 has been secured. Here large forces can be exerted on the pipe member walls 3.

When disassembling the connection sleeve 5, in case of desired inspection of the pipe members 2, the engagement edge 14 is gripped and the closing strip 10 is swung away in the opposite direction B. The strip with hinge ends 11 then passes through its dead centre position again, after which the connection is loosened a little. The connection sleeve can then be moved in axial direction along one of both pipe members 2 in order to free one of the pipe members 2 to be taken out radially out of the conduit, but alternatively can also be removed entirely in radial direction, to which end the closing device 9 is then opened entirely.

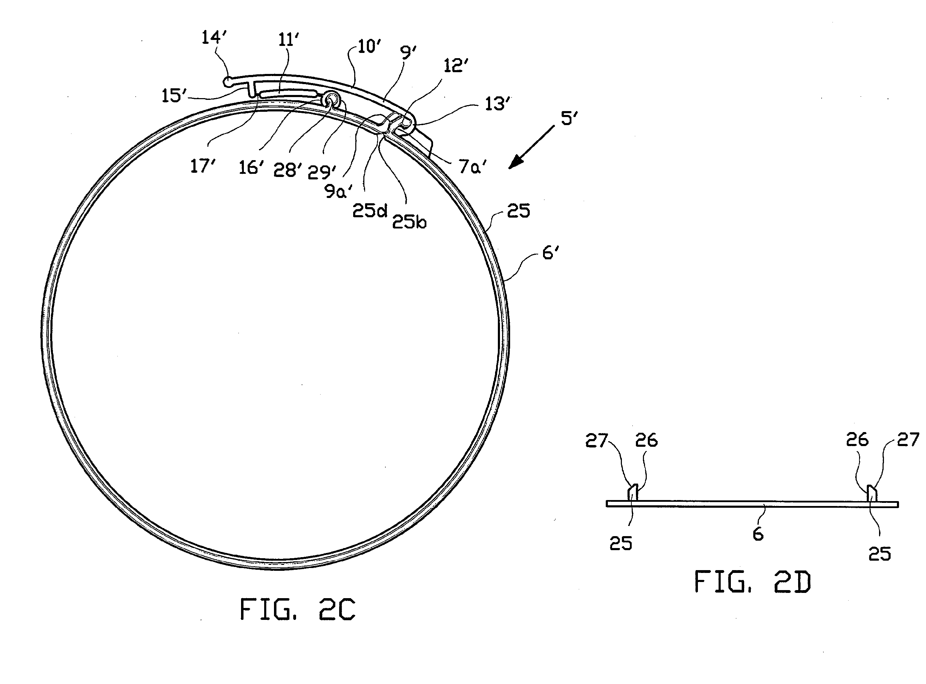

In figure 2C an alternative sleeve connection 5' is shown, in which the sleeve band 6' and the closing device 9' initially were separate parts, possibly formed by means of injection moulding. The strip with hinge ends 11' on the one hand is connected to rib 15' of the closing strip 10' by means of a living hinge 17' and on the other hand connected to slit-shaped edge 29' by means of living hinge 16', which edge is snapped on complementary shaped rib 28' on sleeve band 6'.

In the example of figure 2C the sleeve band edge 7a has also been formed as hook edge 12' for the hook edge 13' of the closing strip 10' cooperating therewith. As a result the strip with hinge ends 11' lies more spaced apart from the end edges of the sleeve band to be clamped against each other.

In figure 2D it is shown in the longitudinal section of the sleeve band 6 (or 6') that at its inner side two ribs 25 have been integrally formed. In figure 2C it can be seen that the ends of those ribs 25 have been provided with pilot edges 25a, b. In figure 2D it can be seen that the ribs 25 have slanting surfaces 27 at the sides facing each other, and have raised surfaces 26 at the opposite sides.

Said embodiment, which is provided with ribs 25, can be manufactured by injection moulding, it then also being possible to provide the closing strip 10' with an opening, such as a tangential slit, and the strip with hinge ends 11' with a complementary, radial partition, through which guidance and centring is provided during the closing of the sleeve band 6'.

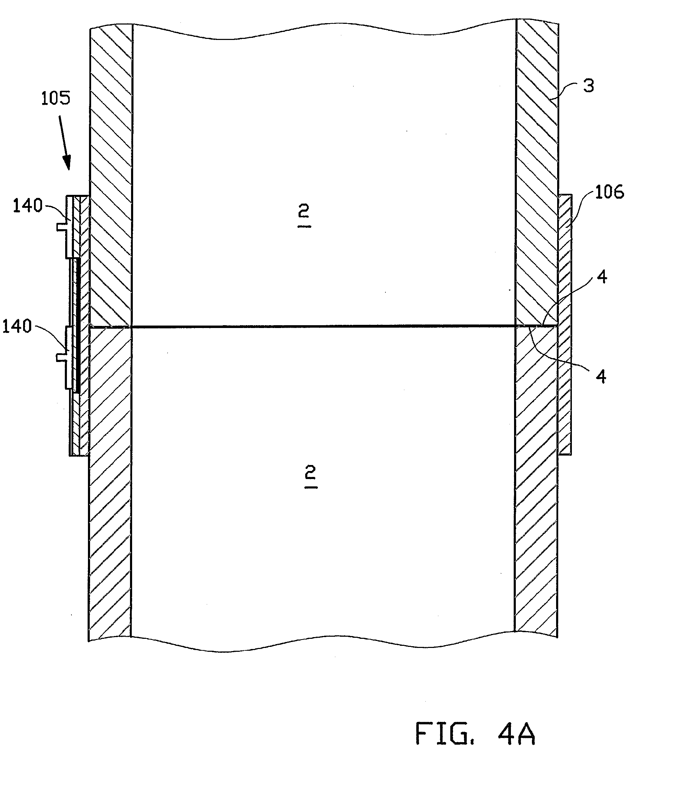

In figure 3 a comparable sleeve connection is shown, in which however now the strip with hinge ends 11 has not been placed through the dead centre position, though for the securing of the closure use is made of a click edge 19 formed in the edge area 8 and a snap edge 21 cooperating therewith and integrally formed at one of the ribs 20 pendent from the closing strip 10.

The sleeve edge and closing strip can be manufactured of bendable material, particularly synthetic material such as PVC or APS, by means of extrusion, in which the hinges 16 and 17 and the snap edge 20 may have been integrally formed by means of co-extrusion, and may be made of a thermoplastic elastomer, particularly of TPE or TPU.

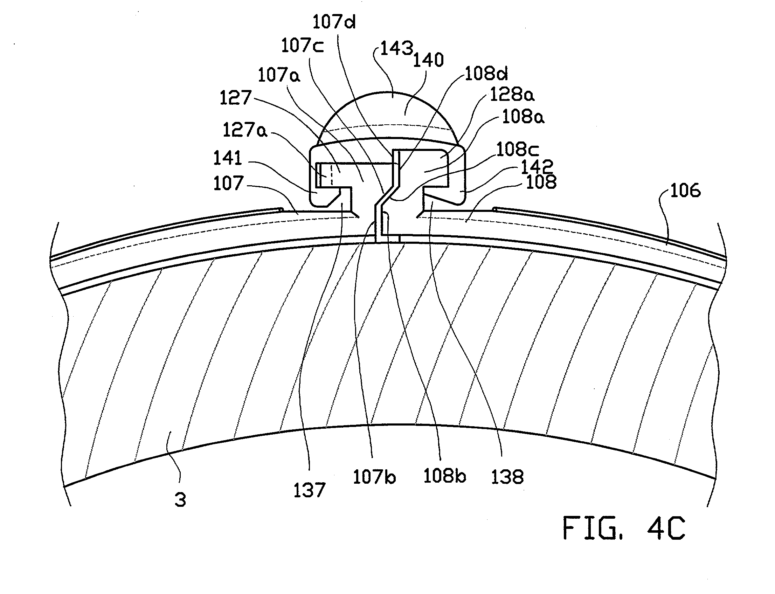

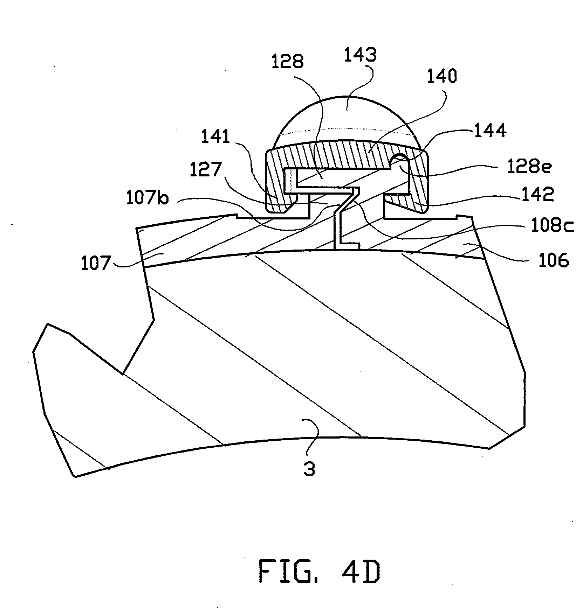

The connection sleeve 105 shown in the figures 4A-D comprises a sleeve band 106, that may be manufactured of the same material as the sleeve band 6. The edge areas 107 and 108, as can be seen in figures 4C and 4D, are formed slightly complementary, and offer room to two slides 140, which can be moved in the direction C between a mounting position, shown for the upper slide 140, and a fixed position, shown with the lower slide 140. The slides 140 have been provided with an engagement lip 143 for facilitating the sliding in the direction C. At the lower side they have been provided with turned edges 141, 142 for engaging about flanges 127, 128 that face away from each other and which are formed as a unity with the end edges 107a and 108a.

The end edges 107a, 108a are formed slightly zig-zagged at the side facing each other, having radial edge areas 107b, 108b, slanting edge areas 107c, 108c and radial edge areas 107d, 108d as can be seen in figures 4C and 4D.

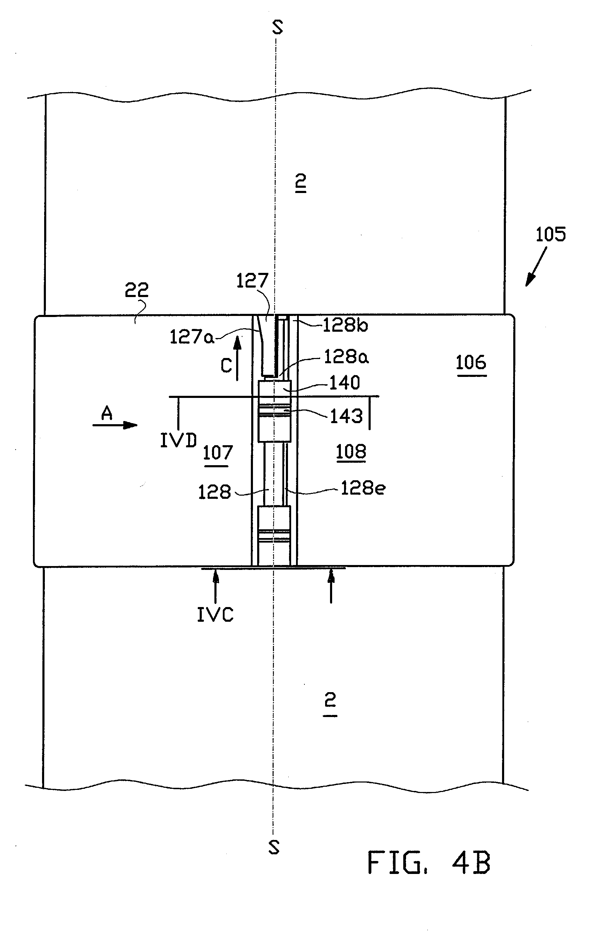

As can be seen in figure 4B the cross-section of the end edges 107a, 108a is not constant over their length. As can be seen in figures 4B and 4D the flange 127 is radially short in the centre area and is extends over by flange 128. In the edge areas as well (see the cross-section of figure 4C) the flange 128 extends higher than the flange 127, but is does not extend over the flange 127. The slide 141 is designed such that the flange 128 is accommodated in a confined manner. The slide 140 is provided here with a slit 144 at the inside, which fits on a rib 128e on the flange 128.

The side facing away from the end edge 108a, of the flange 127, 127a, flares slanting. The inner wall of the slide 140 running past it tapers accordingly. The opposite side of narrowed part 128a of the flange 128 has a little cam 128b near the end, behind which cam a corresponding protrusion is able to snap at the inner wall of the slide 140, in the position of the slide 140 shown at the bottom in figure 4B.

In the position shown at the upper side in figure 4B, the sleeve band 106 after it has been bent around the pipe members 2, can be joined at the edge areas 107 and 108, the flange 127 fitting under/adjacent to the flange 128. The slide 140 then is in the position moved back towards the centre area. Prior to assembly, simply by sliding on in direction C over flange portion 128a, the slide 140 can be moved on to the assembly position, only being attached to end edge 108a. After movement of both slides 140 away from each other to the positions as shown at the bottom in figure 4B, the slides have been snapped fixed. The slides 140 then caused the sleeve band 106 to be tightly biassed about the pipe members 2 due to wedge action, while compressing its wall material.

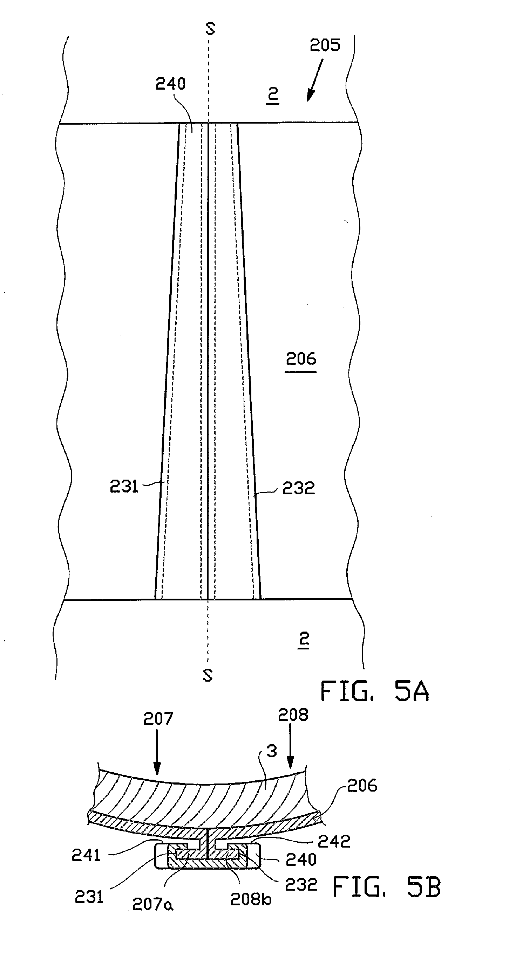

The wedge action can also by utilised in the embodiment shown in figures 5A and 5B. The connection sleeve 205 here comprises a sleeve band 206 again, made of the same material as the sleeve bands 6 and 106. As can be seen in figure 5B the sleeve band 206 has edge areas 207 and 208, with similarly shaped flanges 207a, 208b that face away from each other. Said flanges 207a, 208b have slanting edges that face away from each other.

The flanges 207a, 208b are pressed tightly together due to wedge action, again wile compressing the wall material of the pipe members 2, by means of one single slide 204 provided with corresponding slanting walls 231, 232, which slide is arranged in direction parallel to centre line S of the pipe members 2, the turned legs 241, 242 ensuring confinement.

All sleeve connections can be placed and disassembled without tools. The pipe members 2 can simply be taken out, in radial direction so that other pipe members can remain in their places.

The pipe members may run straight or form a curve.

The sleeve of synthetic material prevents condensation. A thermal bridge is absent. The sleeve band can be designed very thin so that the total diameter of the conduit does not become much larger.

The synthetic sleeve may furthermore be supplied in various colours, to be striking or inconspicuous, whatever is desired.

## Claims

1. Air ventilation conduit comprising at least two consecutive pipe members, and a connection sleeve for connecting the pipe members one to the other, the pipe members being manufactured of a synthetic material that is compressible and having a substantially equal cross-section at their ends that are connected to each other, the connection sleeve comprising a sleeve band manufactured of a bendable synthetic material, and provided with means for forming a squeeze closure for the sleeve band around the ends of the pipe members.

2. Conduit according to claim 1, the pipe members being manufactured of synthetic foamed material, preferably expanded polyethylene.

3. Conduit according to claim 1 or 2, the pipe members with their end edges being placed butt against each other.

4. Conduit according to any one of the preceding claims, the sleeve band being open and at a first and a second end, respectively, being provided with first and second band edges that engage each other, the squeeze closure means preferably comprising tensioning means for tensioning both band edges towards each other, particularly against each other.

5. Conduit according to claim 4, the tensioning means preferably being adapted for activation by motion in a plane perpendicular to the conduit axis, the tensioning means preferably forming a click-through connection.

6. Conduit according to claim 5, the tensioning means preferably comprising a click-through strip which is connected to the sleeve band near its first end and has been provided with first hook means for cooperation with second hook means that have been provided near the second end of the sleeve band.

7. Conduit according to claim 6, the click-through strip being formed as one unity with the sleeve band.

8. Conduit according to claim 6, the click-through strip being manufactured separately and attached to the sleeve band by means of a snap connection.

9. Conduit according to claim 6, 7 or 8, the click-through strip being hinged to the first sleeve band end by means of a bend-rigid strip with hinge ends, and at its side facing away from the first sleeve band end being provided with first snap means that cooperate with the second snap means at the sleeve band, the strip with hinge ends preferably being moveable between a mounting position in which the strip with hinge ends, considered in the direction towards the second sleeve band end, is oriented to the outside of the sleeve band, and a closing position in which the strip with hinge ends, considered in the direction towards the second sleeve band end, is oriented to the inside of the sleeve band, and being moved through a dead centre.

10. Conduit according to claim 8 or 9, the strip with hinge ends being connected by means of integrally formed hinges to the click-through strip and to the sleeve band.

11. Conduit according to claim 9 or 10, the first snap means of relatively soft material being integrally formed with the click-through strip and the second snap means being of the material of the sleeve band.

12. Conduit according to any one of the claims 6-11, the first and second band edge being formed convex and concave, respectively, in order to be able to rotate in each other.

13. Conduit according to any one of the claims 6-12, the connection sleeve being made by co-extrusion.

14. Conduit according to any one of the claims 1-4, the tensioning means being adapted for activation by motion in a plane parallel to the conduit axis, the tensioning means preferably comprising a wedge member that can be slid over the band end edges for tensioning them towards each other, at least one of the band end edges being formed correspondingly slanting.

15. Conduit according to claim 14, the wedge member forming a separate part and preferably being active over at least almost the full length of the band end edges.

16. Conduit according to claim 14, the wedge member being a slide placed permanently on the band end edges.

17. Conduit according to claim 15 or 16, two wedge members being provided that can be slid away from each other for activation.

18. Conduit according to any one of the preceding claims, the sleeve connection being permanently continuously circumferential.

19. Conduit according to any one of the claims 1-18, the sleeve connection in the open position being interrupted in circumferential direction.

20. Conduit according to any one of the preceding claims, the sleeve band at the inner surface being provided with one or more protrusions, preferably situated near the edges, the sleeve band preferably being provided at the inner surface with one or more continuous edges, which preferably have been provided with piloting edges at the ends facing each other, the protrusions at the axial inner side preferably being substantially transverse to the conduit axis and/or the protrusions at the axial outside slanting to the conduit axis.
